# EUROPÄISCHE PATENTANMELDUNG

(11) **EP 4 124 580 A2**
(43) Veröffentlichungstag der Anmeldung: **01.02.2023**
(21) Anmeldenummer: 22185802.0
(22) Anmeldetag: 19.07.2022
(51) Int. Cl.: B65B 35/44, B65B 25/06, B65B 57/16, B65B 5/10, B65B 43/56

(54) **VERFAHREN ZUM LAGE-GENAUEN ABLEGEN EINER PORTION ODER DEREN TEILEN SOWIE HIERFÜR GEEIGNETE ABLAGE-VORRICHTUNG**

(30) Priorität: 29.07.2021 DE 102021119720
(71) Anmelder: TVI Entwicklung und Produktion GmbH, 83052 Bruckmühl (DE)
(72) Erfinder: Völkl, Thomas, 83052 Bruckmühl (DE)
(74) Vertreter: Weickmann & Weickmann PartmbB

(57) **Zusammenfassung**

Statt einer Einlegelinie nur aus üblichen Gurt-Förderern oder Riemen-Förderern werden erfindungsgemäß - neben einer konventionellen Zuförder-Einheit (10) - viele unabhängig voneinander, frei auf einer Verfahr-Fläche (3") bewegliche, von unterhalb der Fahr-Fläche (3") aus angetriebene Fahrzeuge (F) verwendet, die jeweils ein Verpackungselement (V) wie einen Tray tragen, die - beladen mit einer einzelnen Scheibe (S) oder eine Teil-Portion - sehr flexibel das gezielte Zusammenstellen von Portionen (P), aber auch das Zwischenpuffern von Teil-Portionen erlauben.

Die Puffer-Möglichkeit kann ergänzt werden durch einen (bekannten) Zwischenspeicher (17) in Form eines Vertikal-Puffers mit einem vertikal beweglichen Speicher-Regal (7).

## Beschreibung

### I. Anwendungsgebiet

Die Erfindung betrifft das Lage-genaue Ablegen von einer Portion aus einem oder mehreren Teilen, insbesondere Lebensmitteln.

### II. Technischer Hintergrund

Obwohl ein solches Teil auch ein ganzes Lebensmittel wie etwa ein Stück Obst sein kann, handelt es sich in aller Regel um ein zuvor von einem gesamten Lebensmittel-Stück abgetrenntes Teil, etwa eine Scheibe einer Ananas oder ein von einem Fleisch-Stück abgeschnittenes rohes Schnitzel oder Steak.

Solche Portionen werden in aller Regel eingeschweißt in Supermärkten verkauft und liegen hierfür auf einem Verpackungselement, entweder einem ebenen, sogenannten Card-Bord, also einer Platte aus Kunststoff oder Kartonmaterial, oder in einer Verpackungs-Mulde etwa einer Tiefzieh-Verpackung aus Kunststoff. Auch andere Arten von Verpackungselementen sind möglich.

Über das Lebensmittel hinweg erstreckt sich im vollständig abgepackten Zustand eine Siegelfolie, die mit dem Verpackungselement dicht verschlossen ist, also entweder auf dem Rand der muldenförmigen Tiefziehverpackung verschweißt ist oder mit dem Card-Bord, insbesondere an dessen randseitiger Unterseite, dicht befestigt ist.

Hierfür ist es notwendig, dass vor dem Anbringen der Siegelfolie, die aus einem, aber meist mehreren, Teilen bestehende Portion sich an einer vorgesehenen definierten Position auf dem Verpackungselement befindet, um das Anbringen der Siegelfolie nicht zu erschweren, insbesondere indem sich die Portion nicht in den Bereich des Verpackungselementes hinein erstreckt, an dem die Siegelfolie fixiert werden soll. Ferner ist durch eine Anordnung der Portion an einer definierten Position und auch der richtigen Anordnung der Teile einer Portion zueinander ein ansprechendes gleichmäßiges optisches Äußeres angestrebt.

Ferner bestehen Portionen auch häufig aus nicht identischen Teilen, wobei die Teile in einer bestimmten Reihenfolge innerhalb der Portion angeordnet werden sollen.

Zum positionsgenauen zusammen Ablegen der Portionen und auch Zusammenstellen der Portionen ist es bisher bei aus einem Fleischstück abgeschnittenen Scheiben - worauf nachfolgend primär Bezug genommen wird - oder auch anderweitig abgetrennten Teilen, etwa den Beinen oder Flügeln von einem Hähnchen-Körper - üblich, dass die abgetrennten Teile zunächst einzeln von der Trennvorrichtung, insbesondere einer Aufschneide-Vorrichtung, auf eine Zuförder-Einheit zur Verpackungsmaschine fallen. Dort werden sie ggfs. schon zu Portionen oder zumindest Teil-Portionen gruppiert und von dieser - oft in Transportrichtung mehrteiligen - Zuförder-Einheit vom letzten, dem abwerfenden, Zuförderer auf das davor und darunter positionierte Verpackungselemente abgeworfen, das zu diesem Zweck natürlich an dieser Auffang-Position exakt hinsichtlich Position und Drehlage positioniert werden muss, und dies in erheblicher Geschwindigkeit, da häufig die Taktzeit beim Abtrennen von Scheiben von einem Produkt-Stück unter 0,5 Sek. liegt.

Auch das Verpackungselement wird in aller Regel mittels eines Förderbandes transportiert und positioniert, wofür Spezialformen von Förderbändern, die entsprechend aufwändig konstruiert sind, auch einen Querversatz des Verpackungselementes und/oder eine Drehung des Verpackungselementes um die Hochachse ermöglichen.

Dabei ist jedoch zu berücksichtigen, dass bei der Verarbeitung von Lebensmitteln hohe Hygiene-Anforderungen bestehen und deshalb für alle mit dem Lebensmittel in Berührung kommenden Teile zum einen hinsichtlich des Materials nur eine enge Auswahl besteht und zum anderen eine leichte und gründliche Reinigung der Vorrichtung möglich sein muss, was gerade bei Förderbändern einen erheblichen Aufwand darstellen kann, selbst wenn diese Bandförderer so konstruiert sind, dass das Förderband relativ leicht entnommen und separat gereinigt werden kann.

### III. Darstellung der Erfindung

### a) Technische Aufgabe

Es ist deshalb die Aufgabe gemäß der Erfindung, ein Verfahren zum Positions-genauen Ablegen einer Portion auf einem Verpackungselement sowie eine hierfür geeignete Ablage-Vorrichtung zur Verfügung zu stellen, bei der die Fehlerraten beim Positions-genauen Ablegen auch bei schwierig zu handhabenden Produkten wie elastischen Fleisch-Scheiben geringer ist als bei herkömmlichen Lösungen und wobei die Vorrichtung leicht sauber zu halten und zu reinigen ist.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Hinsichtlich des Verfahrens zum Lage-genauen Erzeugen einer Portion aus einem oder mehreren Teilen in oder auf einem Verpackungselement wird diese Aufgabe durch die Abfolge folgender Schritte gelöst:
- Zunächst wird das eine Teil oder bereits mehrere Teile einer Portion hintereinander auf den Zuförderer gelegt oder fallen gelassen, bei mehreren Teilen hintereinander auf den gleichen Zuförderer und vorzugsweise unter Bildung einer Portion, bei der sich die einzelnen Teile zumindest überlappen. Der Zuförderer kann dabei in Transportrichtung aus mehreren Teilen bestehen, wobei dann das Auflegen oder Darauf-Fallen auf den in Transportrichtung hintersten Zuförderer erfolgt.
- Anschließend wird die Position und/oder die Drehlage dieses abgelegten einen oder mehrerer Teile auf dem Zuförderer detektiert.
- Anschließend wird dieses mindestens eine auf dem Zuförderer liegende Teil auf das Verpackungselement abgeworfen.
Allerdings wird vorher
- dieses Verpackungselement in definierter Position auf einem Fahrzeug positioniert, welches keinen eigenen vollständigen Antrieb besitzt, also auf einer beliebigen Fahrfläche - auf der es vorzugsweise unabhängig von allen anderen Fahrzeugen und frei in alle Richtungen verfahrbar ist - nicht selbstfahrend wäre.

Stattdessen wird dieses als "antriebslos" bezeichnete Fahrzeug von unterhalb der Fahrfläche - auf der es fährt oder über der es schwebt - aus angetrieben, wobei sich durchaus dafür notwendige bestimmte Antriebs-Elemente innerhalb des Fahrzeuges befinden können wie etwa Dauermagnete, aber unverzichtbare Teile des Antriebs eben nicht im Fahrzeug, sondern unterhalb der Fahrfläche in einem Fahrboden oder oberhalb der Fahrfläche in einer Fahrdecke angeordnet sind, beispielsweise ein Array von Elektromagneten.

Dadurch kann das antriebslose Fahrzeug mittels des z.B. unterhalb der Fahrfläche liegenden Antriebs zumindest in beiden Erstreckungsrichtung in X und Y der meist zweidimensionalen Fahrfläche frei verfahren werden und auch unter dem Abwurfende der Zuförder-Einheit an einer hinsichtlich der Position und/oder der Drehlage definierten Auffang-Position positioniert werden für das Auffangen des vom abwerfenden Zuförderer, in der Regel bei mehreren Zuförderern das in Förderrichtung letzten Zuförderers so, dass die abgeworfene Portion oder Teilportion in der gewünschten Soll-Lage - hinsichtlich Position und/oder Drehlage - auf dem Verpackungselement auftrifft.

Beim Abwerfen wird das Fahrzeug meist an einer definierten Auffang-Position stillstehen, die von den während des Abwurfs herrschenden Auffang-Parametern abhängt, also allen Parametern, die sowohl auf der abwerfenden Seite als auch auf der auffangenden Seite den Abwurf-Vorgang beeinflussen, etwa
- Abwurf-Geschwindigkeit,
- Endkante des abwerfenden Förderers,
- Parameter des abzuwerfenden Teiles wie Haftfähigkeit gegenüber dem abwerfenden Förderer, Elastizität, Gewicht,
- Höhe der Endkante gegenüber dem auffangenden Verpackungselement.

Um einen Faltenwurf der z.B. Scheibe auf dem Verpackungselement zur vermeiden, kann es jedoch auch sinnvoll sein, dass sich beim Auffangen das Verpackungselement und damit das Fahrzeug in Abwurf-Richtung bewegt, idealerweise mit einer Geschwindigkeit, die der horizontalen Komponente der Abwurfbewegung im Zeitpunkt des Auftreffens auf dem Verpackungselement entspricht.

Auf diese Art und Weise wird die notwendige Positionierung auch hinsichtlich der Drehlage allein von dem Fahrzeug erledigt, sodass zum einen nur eine geringe Anzahl von einzelnen Zuförderern benötigt wird, zum anderen die Zuförderer, insbesondere als Band-Förderer oder Riemen-Förderer, von einer sehr einfachen Bauart sein können, also weder ein Spreizband sein müssen, noch ein die Drehung des darauf liegenden Produktes ermöglichendes Band sein müssen noch einen Querversatz des darauf liegenden Produktes ermöglichen müssen.

Damit sinkt auch die Anzahl der schwierig und aufwändig zu reinigenden Teile der Ablagevorrichtung erheblich, denn die Fahrfläche, auf oder über der sich die Fahrzeuge bewegen, kann eine glatte, dichte, leicht zu reinigende Fläche, meist aus Edelstahl, sein, die sehr einfach zu reinigen ist.

Zunächst soll klargestellt werden, dass es prinzipiell zwei verschiedene, auch kombinierbare, Wege zum Herstellen einer aus mehreren Teilen bestehenden Portion- seien deren Teile einander berührend, gar überlappend, oder nicht - nach solchen Portionier-Parametern auf dem Verpackungselement gibt:
Bei **Methode A** wird die herzustellende Portion oder auch nur eine Teil-Portion hiervon, die aber ebenfalls bereits aus mehreren Teilen bestehen kann, bereits auf der Zuförder-Einheit gebildet, indem dort auf dieser Zuförder-Einheit mehrere Teile in Form einer Portion oder Teil-Portion, also in der richtigen Zuordnung zueinander abgelegt werden, insbesondere zeitlich hintereinander, abgelegt werden.

Bei **Methode B** wird die herzustellende Portion oder eine Teil-Portion hiervon, die ebenfalls bereits aus mehreren Teilen bestehen kann, erst auf dem Verpackungselement gebildet, durch Abwerfen eines oder mehrerer Teile, insbesondere auch einer Teil-Portion, mittels des abwertenden Zuförderers auf das Verpackungselement auf dem Fahrzeug, insbesondere zeitlich hintereinander.

Wie ersichtlich, ist auch eine Kombination der beiden Methoden möglich, indem beispielsweise auf der Zuförder-Einheit jeweils eine Teil-Portion gebildet wird, und diese beiden Teilportionen nacheinander auf dem Verpackungselement abgelegt werden.

Auf diese Art und Weise besteht eine hohe Gestaltungsfreiheit, wie die auf dem Verpackungselement zu bildende Portion dort erzeugt wird.

Theoretisch kann das Teil oder die Portion statt auf einem Verpackungselement auch direkt auf dem Fahrzeug abgelegt werden, was aber das weitere Handling des Teils oder der Portion stark erschwert und deshalb nicht im Fokus steht.

Wichtig bei dieser Vorgehensweise ist die exakte Bestimmung der Auffang-Position, an der sich das Fahrzeug und damit das darauf definiert positionierte Verpackungselement beim Auffangen des Teils oder der Portion befinden muss. Hierfür werden vorzugsweise diverse diese Auffang-Position mitbestimmende Auffang-Parameter berücksichtigt, die bekannt sein müssen oder zunächst ermittelt werden müssen, welche sein können:
- die Ist-Position und/oder Drehlage des wenigstens einen Teiles auf dem abwerfenden Zuförderer
   und/oder
- die Abwurfgeschwindigkeit, mit der der abwerfende Zuförder dieses wenigstens eine Teil abwirft bzw. abwerfen wird
   und/oder
- dem Gewicht des auf dem Zuförderer liegenden Teiles oder der Teil-Portion oder Portion
   und/oder
- der ermittelten Ist-Position nicht des abzuwerfenden, sondern des vorhergehenden einen oder mehrerer Teile auf dem abwerfenden Zuförderer und/oder auf dem vorherigen Verpackungselement
   und/oder
- der Trend der Veränderung der Ist-Position und/oder Drehlage des einen oder der mehreren Teile auf dem abwerfenden Zuförderer und/oder dem Verpackungselement.

Durch diese Auffang-Parameter ist die Steuerung in der Lage, die Auffang-Position zu berechnen und unter Berücksichtigung von Positionen auch der vorhergehenden Teile und insbesondere dem Trend der Veränderung der Position und/oder Drehlage von einem zum nächsten Abwurf die Berechnung dieser Auffang-Position zusätzlich zu optimieren.

Häufig wird beim Auftreffen des Teiles auf dem Verpackungselement dieses nicht stillstehen sondern in Bewegung sein, also auch das darunter befindliche, tragende Fahrzeug.

Im Idealfall soll dann die horizontale Fahrgeschwindigkeit des Fahrzeugs mit der horizontalen Komponente der Abwurfgeschwindigkeit des abwerfenden Zuförderers übereinstimmen, wofür erst recht einige oder alle der zuvor genannten Auffang-Parameter berücksichtigt werden sollten, um die Geschwindigkeit und/oder Richtung und/oder Drehlage des Verpackungselements im Augenblick des Abwurfs an der Auffang-Position korrekt zu ermitteln.

Beim Herstellen von Portionen muss in aller Regel mindestens ein Portionier-Parameter eingehalten werden, beispielsweise ein Soll-Gewicht der Portion.

Es gibt jedoch auch schwieriger einzuhaltende Portionier-Parameter, weshalb beim Erstellen von Portionen, insbesondere aus Fleischscheiben, auf einem solchen Verpackungselement die Scheiben nicht in der Reihenfolge ihres Abtrennens vom Fleisch-Stück als Portion auf dem Verpackungselement abgelegt werden sollen oder allgemein ausgedrückt, angelieferte Teile eines Lebensmittels nicht in der Anlieferungs-Reihenfolge auf dem Verpackungselement abgelegt werden können oder sollen.

Dies kann unterschiedliche Gründe haben:
Beim Herstellen von gewichtsgenauen Portionen kann es sein, dass die letzte in Reihenfolge des Abtrennens zur Portion eigentlich hinzuzufügende Scheibe dann eine außerhalb der zulässigen Gewichtsgrenzen liegende Portion ergeben würde und stattdessen eine andere Scheibe mit einem höheren oder niedrigeren Gewicht als letzte der Portion ergänzt werden soll.

Ein anderer Grund können beispielsweise optische Gründe sein, indem man aus einem in Aufschneide-Richtung unregelmäßigen Fleischstück geschnittene Scheiben auch hinsichtlich ihrer Position und damit eventuell Größe im Fleisch-stück und/oder ihrer Farbe und/oder anderer Sortier-Parameter - die die einzelne Scheibe kennzeichnen - aufeinanderfolgen lassen möchte.

Beispielsweise kann ein Portionier-Parameter darin bestehen, dass eine Portion im richtigen Verhältnis und in der richtigen Reihenfolge aufeinander folgender Scheiben aus unterschiedlichen Bereichen des Fleisch-Stückes, aus denen sie abgetrennt werden, bestehen soll, beispielsweise eine Scheibe aus dem Anfangsbereich, 3 Scheiben aus dem Mittelbereich und eine Scheibe aus dem Endbereich dieser Fleisch-Stücke.

Auch eine solche Portion kann direkt im Anschluss an die Aufschneidemaschine nicht erzielt werden. Dann wird zunächst nur eine Teilportion, beispielsweise die Anfangs-Scheibe, auf dem Verpackungselement abgelegt, dieses zwischengelagert und bei zur Verfügung stehen weiterer passender Scheiben diese ergänzt.

Weitere Sortier-Parameter für eine einzelne Scheibe können sein
- das Gewicht des Teiles, insbesondere der Scheibe
   und/oder
- die Größe des Teiles nicht nur in seiner Hauptebene, sondern oder stattdessen auch quer hierzu, insbesondere in seiner Höhe
   und/oder
- die Krümmung des Lebensmittels.

Eine solche Portionierung erfordert, dass momentan in Richtung Verpackungs-element transportierte Teile, die aber den momentan notwendigen Sortier-Parameter nicht erfüllen, nicht auf dem Verpackungselement abgelegt, sondern zwischengespeichert werden, für eine Verwendung auf einem anderen Verpackungselement und/oder bis ein den momentan notwendigen Sortier-Parameter erfüllendes Teil zur Verfügung steht.

Gemäß obiger **Methode B** kann ein solches Portionieren nur mittels der Fahrzeuge durchgeführt werden:
So kann auf dem Verpackungselement des Fahrzeuges nur ein erster Teil der herzustellenden Portion, sei es ein einzelnes Teil oder eine erste Teil-Portion, abgelegt werden, beispielsweise aus hintereinander abgetrennten Scheiben, weil diese alle die bisher zu erfüllenden Sortier-Parameter erfüllt haben.

Wenn das nächste in Richtung Verpackungselement transportierte Teil den oder die momentan zu erfüllenden Sortier-Parameter nicht aufweist, wird dieses Fahrzeug aus der Auffangposition weg verfahren und abseits geparkt, und erst bei zur Verfügung stehen eines nächsten geeigneten Teiles auf dem abwerfenden Zuförderer, welches also die momentanen Sortier-Parameter für dieses Verpackungselement/Portion erfüllt, das Fahrzeug wieder an die Auffang-Position verfahren und dieses geeignete Teil auf dem Verpackungselement abgelegt wird.

Der Vorgang des abseits Parkens und erst wieder Anfahrens der Auffang-Position, wenn ein nächstes geeignetes Teil zur Verfügung steht, kann auch mehrfach hintereinander wiederholt werden, bis eben die gewünschte Portion fertiggestellt ist.

Da in aller Regel eine Vielzahl solcher unabhängig voneinander verfahrbarer Fahrzeuge zur Verfügung steht, wird das Portionieren und die Abgabe der fertig gestellten Portion an eine Verpackungsmaschine allein schon dadurch beschleunigt, dass in dem Zeitraum, in dem ein bestimmtes Fahrzeug ein neues Teil oder eine neue Portion aufnimmt, andere Fahrzeuge gleichzeitig ihre Verfahrwege zur Übergabe an die Verpackungsmaschine, zu einer Parkposition oder von einer Parkposition zur demnächst anzufahrenden Auffang-Position zurücklegen, oder deren Format-Platten getauscht oder gereinigt werden.

Die Eignung, ob das Teil für die entsprechende Position innerhalb der herzustellenden Portion geeignet ist oder nicht, wird also anhand der Sortier-Parameter festgestellt, vorzugsweise natürlich automatisch festgestellt mittels der Steuerung und der mit ihr verbundenen entsprechenden Sensorik zur Ermittlung dieser Sortier-Parameter.

So kann einer der Zuförderer der Zuförder-Einheit mit einer Waage zum Ermitteln des Gewichts des darauf liegenden Teils oder der Teil-Portion ausgestattet sein, über dem Zuförderer eine Kamera zum Ermitteln der Größe und/oder Position und/oder Drehlage vorhanden sein, an der Antriebswelle des Zuförderers, insbesondere des abwerfenden Zuförderers, ein Drehzahl-Sensor zum Ermitteln der Abwurf-Geschwindigkeit vorhanden sein.

Die Portionier-Möglichkeiten können auch durch andere Maßnahmen geschaffen oder gegenüber der Portionierung nur mit Hilfe der Fahrzeuge weiter erhöht werden um die Portionierung noch flexibler zu gestalten:
So können momentan nicht geeignete Teile oder Teil-Portionen separat voneinander zwischengespeichert werden.

Da jeder einzelne Speicherplatz in einem solchen Zwischenspeicher die gleiche Speicherfunktion erfüllt wie ein abseits geparktes Fahrzeug, kann dadurch die Anzahl an benötigten Fahrzeugen und auch der Bedarf an Fahrfläche und Parkfläche hierfür geringgehalten werden und/oder die Komplexität der Portionier-Vorgänge erhöht werden.

Um die Komplexität des die Fahrzeuge antreibenden, unterhalb der Fahrfläche angeordneten Antriebes und/oder der Steuerung in Grenzen zu halten, können die Bewegungsmöglichkeiten der Fahrzeuge mehr oder weniger vielfältig gewählt werden:
Wenn das Fahrzeug bei einer Änderung seiner Fahrtrichtung nicht auch zusätzlich eine Drehung um seine Hochachse vollziehen können muss, sondern stattdessen bei gleicher Drehlage nach der Richtungsänderung schräg stehend zu dieser neuen Richtung weiterfährt, ist dies eine einfacher umzusetzende Lösung als bei Richtungsänderung auch analog und daran angepasst eine Drehung des Fahrzeuges um die Hochachse zu bewirken, sodass das Fahrzeug also eine typische Kurvenfahrt vollzieht und immer mit seiner Frontseite in die momentane Fahrtrichtung weist.

Auch vereinfacht es die Lösung, wenn eine Drehung des Fahrzeuges um die Hochachse beispielsweise nur im Stillstand des Fahrzeuges möglich ist.

Hinsichtlich einer Ablage-Vorrichtung wird diese Aufgabe dadurch gelöst, dass diese zum einen eine Zuförder-Einheit umfasst, die einzelne Teile oder Teil-Portionen oder eine ganze Portion von einer Ursprungs-Quelle der Teile, insbesondere einer Aufschneide-Maschine, übernimmt und einem Verpackungselement zufördert und es darauf abwerfen kann.

Zum anderen umfasst die Ablage-Vorrichtung ein Fahrzeug-System mit einer Vielzahl von alleine antriebslosen Fahrzeugen, auf denen sich das Verpackungs-element befindet. Dieses Fahrzeug-System ist so ausgebildet, dass die Fahrzeuge auf einer Fahrfläche fahren oder über einer Fahrfläche schweben und unabhängig voneinander von einem unterhalb der Fahrfläche angeordneten Antrieb, vorzugsweise kontaktlos, etwa magnetisch, antreibbar sind und damit an einer Auffang-Position unterhalb des abwerfenden Zuförderers hinsichtlich Position und/oder Drehlage exakt positioniert werden können.

Teile des Antriebes, beispielsweise Permanent-Magnete, können sich dabei durchaus im Fahrzeug befinden, jedoch nicht der gesamte Antrieb, sodass das Fahrzeug ohne außerhalb des Fahrzeuges liegende Antriebsteile nicht fahrfähig ist.

Ferner ist eine Steuerung zum Steuern zumindest beweglicher Teile der Ablage-Vorrichtung vorhanden.

Bei den Fahrzeugen handelt es sich um die Fahrzeuge eines Fahrzeug-Systems, die wie zuvor beschrieben alleine nicht fahrfähig sind auf einer beliebigen Fahrfläche, sondern nur mit Hilfe des unter der Fahrfläche im Fahrboden vorhandenen spezifischen Antriebes, wobei im Fahrzeug durchaus zu diesem Antrieb gehörende Teile, etwa Magnete, angeordnet sein können.

Die vorhandene Steuerung steuert sowohl das Fahrzeug-System als auch die Zuförder-Einheit hierzu, wobei die Fahrzeuge unabhängig voneinander auf der Fahrfläche verfahrbar sind oder über der Fahrfläche im Abstand schweben und somit auch an einer von der Steuerung vorgegebenen Auffang-Position unterhalb des abwerfenden Zuförderers exakt hinsichtlich Position und Drehlage positioniert werden können.

Trotz nur weniger, im Idealfall nur eines einzigen, Zuförderers wird hierdurch eine hochflexible Ablage-Vorrichtung geschaffen.

Da unterschiedliche Verpackungselemente - je nach Auftrag, ggfs. sogar gemischt während des Aufschneidens ein und derselben Charge von Lebensmittel-Stücken - eingesetzt werden müssen, besitzt jedes Fahrzeug vorzugsweise eine Befestigungsvorrichtung, mit deren Hilfe auf der Oberseite des Fahrzeuges in einer definierten Position, insbesondere formschlüssig, auf sehr einfache Art und Weise eine Formatplatte befestigt werden kann, die hinsichtlich Position und Gestaltung an ihrer Oberseite, beispielsweise mittels formschlüssigen Aufnahmen und Anschlägen, auf das darauf anzuordnende Verpackungselement abgestimmt ist, welches dadurch in definierter Position auf der Formatplatte und damit auf dem Fahrzeug angeordnet werden kann.

Vorzugsweise ist die Befestigungs-Vorrichtung so gestaltet, dass ein und dieselbe Formatplatte auch in mehreren verschiedenen Positionen, beispielsweise zueinander um 90° verdreht oder in einer der horizontalen Erstreckungsrichtungen des Fahrzeuges versetzt - auf diesem positioniert werden können. Dies erhöht die Variabilität der Ablage-Vorrichtung zusätzlich.

Vorzugsweise besteht die Fahrfläche in einer geschlossenen und vorzugsweise ebenen und/oder dichten Oberseite einer Fahrplatte, die aus einem leicht zu reinigendem Material, insbesondere Edelstahl, besteht.

So können aus einer Charge aufzuschneidender Lebensmittel-Stücke völlig unterschiedliche Portionen erzeugt werden, beispielsweise einerseits Portionen nur aus dem Anfangsteil des Lebensmittel-Stückes oder Portionen nur aus dem Mittelteil des Lebensmittel-Stückes oder auch Portionen gemischt mit Teilen aus unterschiedlichen Bereichen des Lebensmittel-Stückes.

### c) Ausführungsbeispiele

Ausführungsformen gemäß der Erfindung sind im Folgenden beispielhaft näher beschrieben. Es zeigen:
- **Figuren 1a - e:**: eine erste Bauform der Ablage-Vorrichtung in der Seitenansicht,
- **Figuren 2a** - **f:**: die Ablage-Vorrichtung der **Figuren 1** in der Aufsicht von oben,
- **Figur 3a** - **c:**: eine zweite Bauform der Ablage-Vorrichtung in der Seitenansicht
- **Figur 4a, b:**: die Ablage-Vorrichtung der **Figuren 3a****,** **b** in der Aufsicht von oben, jeweils in unterschiedlichen Funktions-Zuständen.

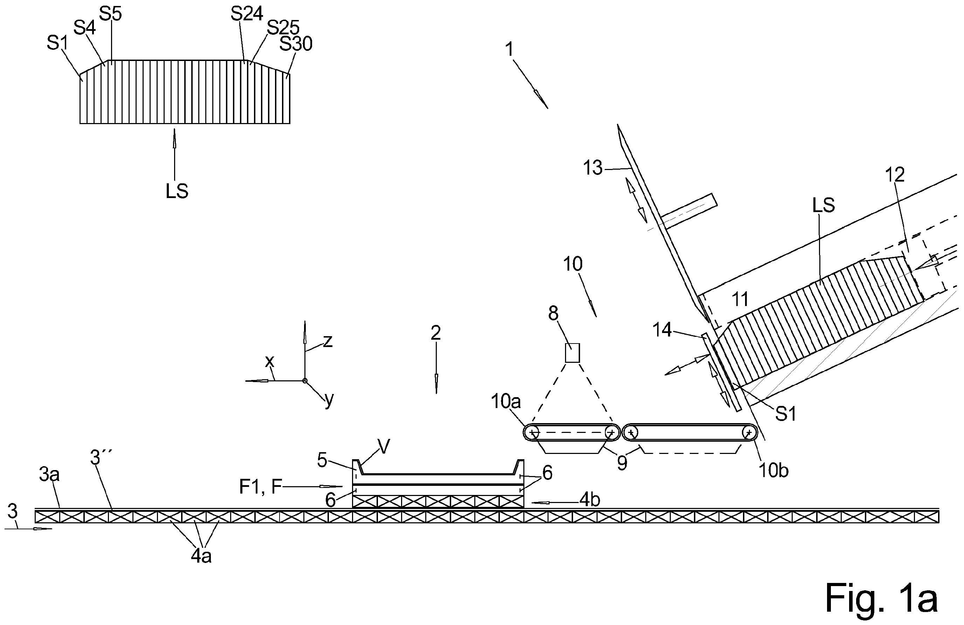

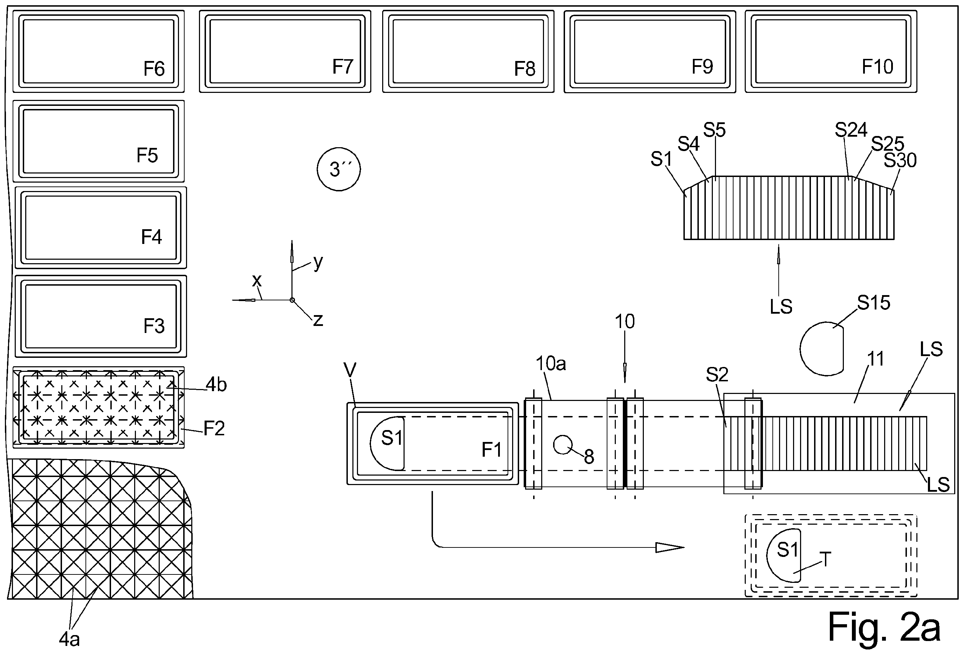

Wie am besten **Figur 1a** und **Figur 2a** erkennen lassen, besteht die Ablage-Vorrichtung 1 aus einem Fahrzeug-System 2 und einer Zuförder-Einheit 10 zum Beladen der Fahrzeuge F, indem die in Förderrichtung X transportierende Zuförder-Einheit 10 aus in Förderrichtung X mehreren, wie dargestellt beispielsweise zwei, Förderern 10a, b bestehen kann, wovon der in Förderrichtung X vorderste ein abwerfender Förderer 10a ist, der in einer solchen Höhenlage und X-Position relativ zu einem in einer Auffang-Position stehenden oder auch in Fördererrichtung X fahrenden Fahrzeug F des Fahrzeug-Systems 2 mit seinem Abwurfende endet, sodass über das Ende des angetriebenen abwerfenden Förderers 10a herabfallende Teile T, insbesondere Scheiben S, auf dem Fahrzeug F zu liegen kommen, bei flachen Teilen T wie etwa Scheiben S vorzugsweise flach liegend und nicht gefaltet. Einer der Förderer 10a, b ist in aller Regel mit einer Waage 9 zum Wiegen des darauf liegenden Teils T ausgestattet.

Das Fahrzeug-System 2 umfasst eine Vielzahl von Fahrzeugen F, in diesem Fall F1 - F10, die in der Lage sind, unabhängig voneinander gesteuert auf der Fahrfläche 3", die durch die X- und Y-Richtung aufgespannt wird und auf der die Vertikale Z vorzugsweise senkrecht steht, verfahren zu werden.

Die Fahrzeuge F verfügen jedoch über keinen eigenen Antriebsmotor, mit dem sie zum Beispiel mittels Rädern auf jeder beliebigen Fahrfläche fahren könnten, sondern sind quasi-antriebslos, da sich der Hauptteil ihres Antriebs unter der Fahrfläche 3" in dem Fahrboden 3 befindet:
Dieser besteht z.B. in der Aufsicht betrachtet aus einem rasterartig, vorzugsweise in Form eines in X-und Y-Richtung orientierten Rechteck-Gitters und vorzugsweise mit nur geringstem Abstand zueinander angeordneten, Elektromagneten als Boden-Magneten 4a - nur in **Figur 2a** angedeutet - deren im aktivierten Zustand erzeugtes Magnetfeld den darüber verlaufenden Fahrbelag 3a durchdringt, indem dieser aus einem magnetisch durchlässigen Material wie etwa einer Platte aus Edelstahl besteht.

Die Fahrzeuge F besitzen auf ihrer Unterseite ebenfalls Magnete, jedoch vorzugsweise Permanent-Magnete als Fahrzeug-Magnete 4b, ebenfalls über die Bodenfläche des Fahrzeuges F rasterartig verteilt, vorzugsweise mit der gleichen Raster-Ausrichtung und vorzugsweise den gleichen Abständen der Fahrzeug-Magnete 4b wie die der Boden-Magnete 4a. Durch gezieltes zeitlich versetztes Ansteuern bestimmter Boden-Magnete 4a wird das Fahrzeug F dadurch in eine gewünschte Richtung bewegt.

Auf der Oberseite des Fahrzeuges F befinden sich eine oder mehrere Befestigungs-Vorrichtungen 6, die das vorzugsweise formschlüssig durch Aufsetzten erfolgende Befestigen einer Formatplatte 5 erlauben, deren Oberseite an die Form und Dimension des darauf abzulegenden Verpackungs-Elementes V, hier eines wannenförmigen Trays V, formschlüssig ermöglicht.

Die Formatplatte 5 kann auch über das Fahrzeug F in der Aufsicht betrachtet seitlich, auch in allen Richtungen, vorstehen, und insbesondere sind die Befestigungs-Vorrichtungen 6 so angeordnet, dass die Formatplatte 5 in der Aufsicht betrachtet in mehreren, beispielsweise 90° voneinander unterschiedenen, Drehlagen auf dem Fahrzeug F aufsetzbar und befestigbar ist.

Woher die Zuförder-Einheit 10 die mittels der Fahrzeuge F zu transportierenden und auch zwischen zu speichernden Teile T erhält und um welche Teile von Lebensmitteln - seien es ganze Lebensmittel-Stücke oder Teile von Lebensmittel-Stücken - ist für die vorliegende Erfindung unerheblich.

Dargestellt sind als Teile T die Scheiben S eines in Scheiben aufzuschneidenden Lebensmittel-Stückes LS wie etwa eines Fleischstückes, welches in diesem Fall in einem Formrohr 11 schräg nach unten vorwärts geschoben wird, und dessen Überstand über das Formrohr 11 von einem quer zu dessen Erstreckungsrichtung hin und her beweglichen, in diesem Fall rotierenden, Messer 13 abgetrennt werden, wodurch die abgetrennte Scheibe aufgrund der Schrägstellung flach auf den Anfang der Zuförder-Einheit 10 fällt.

Um die Dicke der Scheiben S zu bestimmen, wird das Lebensmittel-Stück LS, hier das Fleischstück, mittels eines Längs-Pressstempels 12 im Formrohr 11 vorwärts geschoben bis zu einer Anschlag-Platte 14, die sich zusammen mit dem Messer 13 quer zur Erstreckungsrichtung des Formrohres 11 hin und her bewegen kann.

Dieses Lebensmittel-Stück LS in Form eines Fleischstückes ist links oben in **Figur 1a** nochmals separat in der Seitenansicht dargestellt, um das vorliegende Problem unterschiedlich großer und bei gleicher Dicke damit unterschiedlich schwerer Scheiben S1 bis S30 darzustellen:
In der Regel ist ein solches Fleischstück nicht quaderförmig, sondern besitzt am Anfang und Ende einen zunehmenden bzw. abnehmenden Querschnitt, wie schematisch angedeutet.

Je nachdem, ob durch das Vorwärtsschieben mittels des Längs-Pressstempels 12 eine Verpressung des Fleischstückes LS stattfindet oder nur ein Vorwärtsschieben, nimmt das Fleischstück LS auch in seinem Anfangs- und Endbereich den Querschnitt des Formrohres, in dem es aufgenommen ist, an oder nur teilweise an oder überhaupt nicht an, sodass bei unveränderter Scheibendicke die Scheiben unterschiedlich schwer werden.

Ebenso kann das Anfangsteil und das Endteil des Fleischstückes sich vom mittleren gleichmäßigen Teil auch in anderen Parametern unterscheiden, beispielsweise seiner Farbe, seines Fettanteils u.ä..

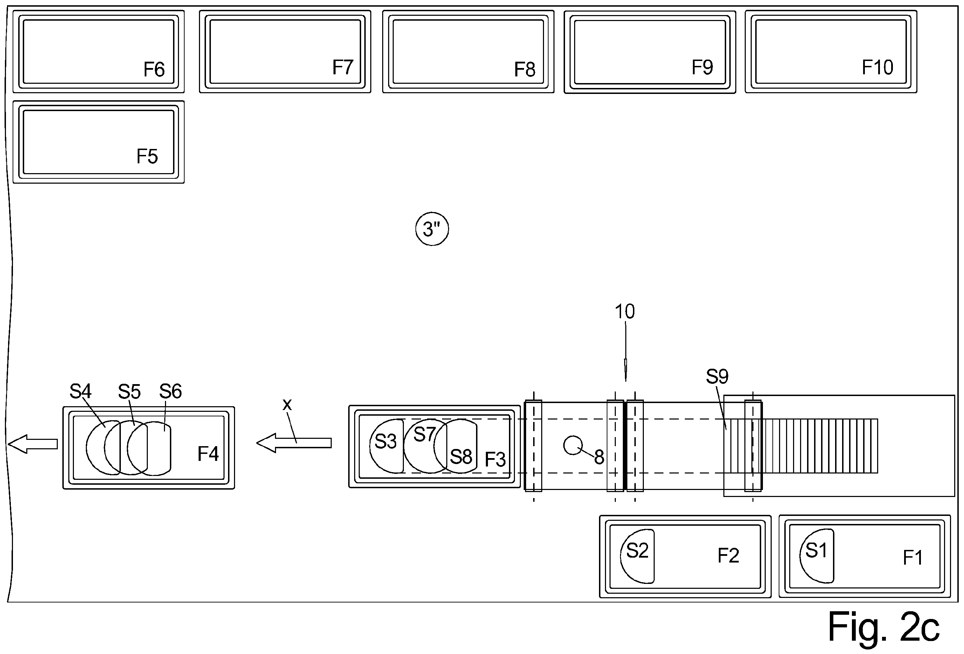

Häufig sollen auf dem Verpackungselement V jedoch Portionen P aus mehreren, hier jeweils drei, einander teilweise überlappenden, also geschindelten Scheiben erzeugt werden wie in **Figur 2c** gezeigt. Dann jedoch soll zumindest die vollständig sichtbare oberste Scheibe immer aus dem Mittelteil des Fleischstückes stammen, vorzugsweise auch die nächst untere, hier mittlere, der drei Scheiben.

Die ein anderes Aussehen und/oder ggfs. ein anderes Gewicht oder Größe besitzenden Scheiben S1 bis S4 aus dem Anfangsbereich oder S25 bis S30 aus dem Endbereich sollen dagegen nicht die oberste, sondern eher die unterste Scheibe der Portion P auf dem Verpackungs-Element V bilden und müssen somit als erste auf ein Fahrzeug F mit dem Verpackungs-Element V abgeworfen werden, dann jedoch muss gewartet werden, bis Scheiben aus dem Mittelteil von S5 bis S24 aufgeschnitten werden und zur Verfügung stehen.

Dabei tritt das Problem auf, dass die Scheibe S aufgrund der Rotationsrichtung des Messers 13 eine Ablenkkraft erfahren kann, was dazu führt, dass die abgetrennte Scheibe S auf dem Zuförderer 10, insbesondere nach Übergabe von einem zum nächsten Förderer bei einer mehrteiligen Zuförder-Einheit, auf dem abwerfenden Förderer 10a nicht immer in der exakten Soll-Position und Soll-Drehlage (in der Aufsicht betrachtet) liegt, was jedoch die Voraussetzung dafür ist, dass diese Scheibe nach Abwurf auf dem Verpackungs-Element V sich dort in der exakten Soll-Lage befindet.

Dies wiederum ist notwendig, damit der Rand des Verpackungs-Elements V, hier des schalenförmigen Trays, nicht von der Scheibe S belegt oder beschmutzt ist, da er nach vollständiger Befüllung mit Siegelfolie dicht verschlossen werden soll, die auf diesem Rand dicht aufgesiegelt werden soll. Um Verpackungsmaterial einzusparen, ist das Verpackungs-Element V auch relativ eng zu der abzulegenden Portion P bemessen.

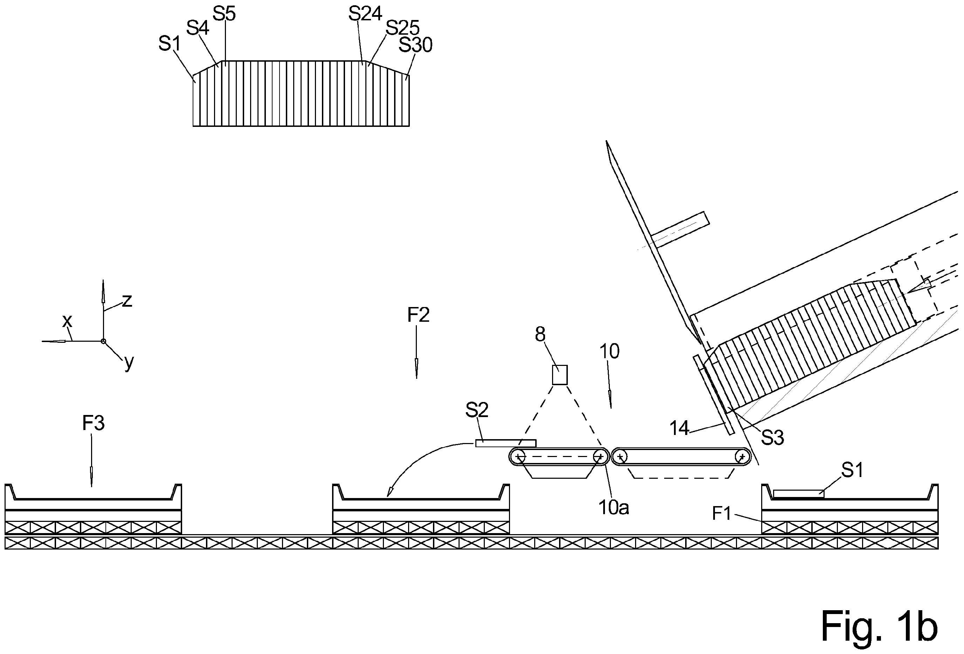

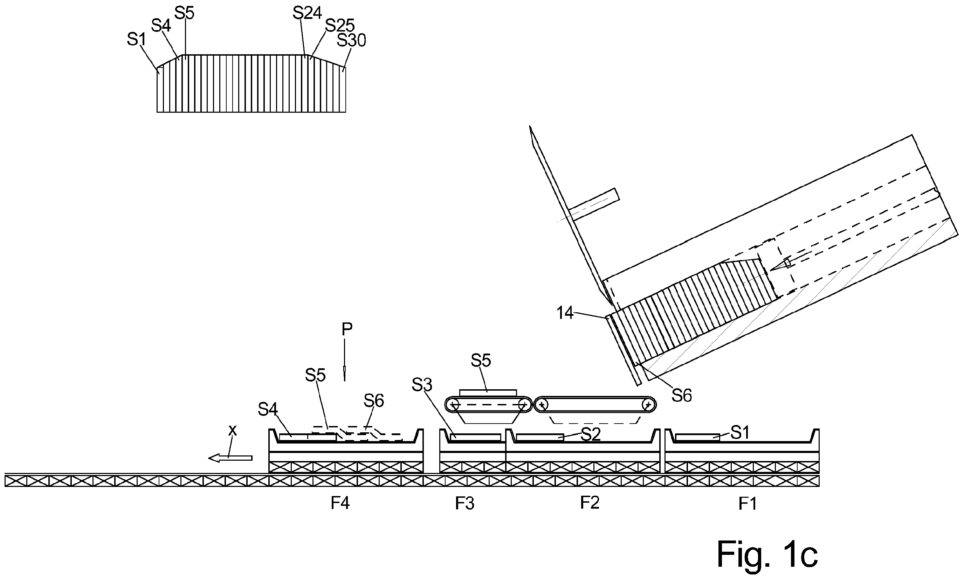

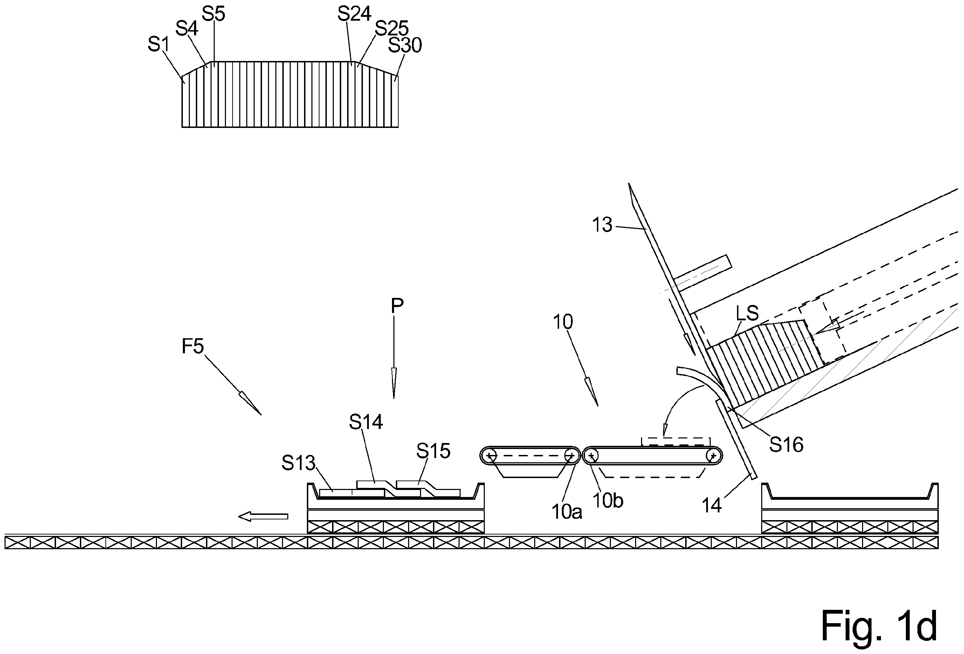

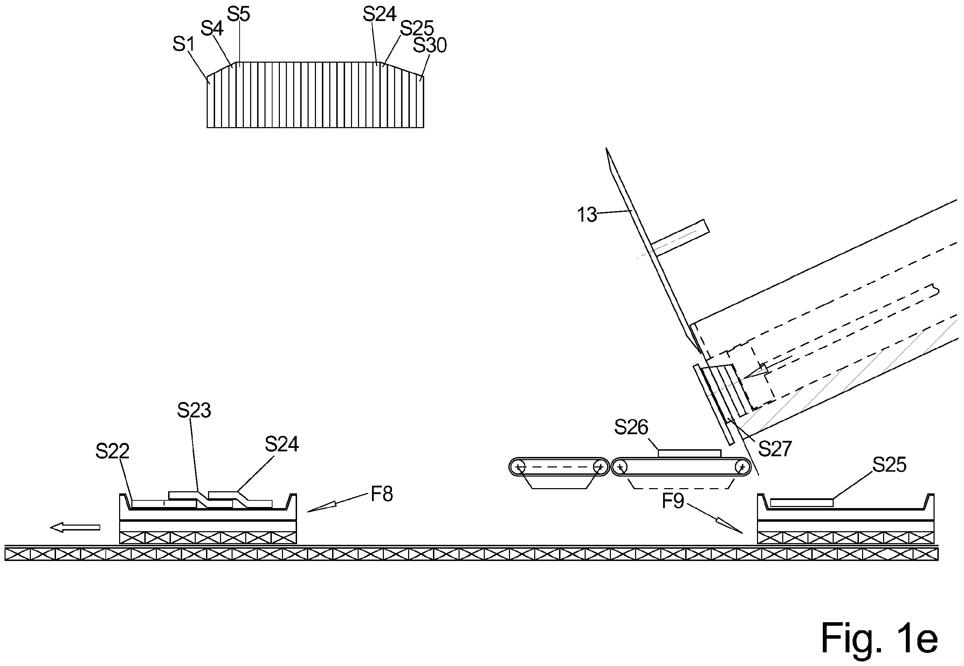

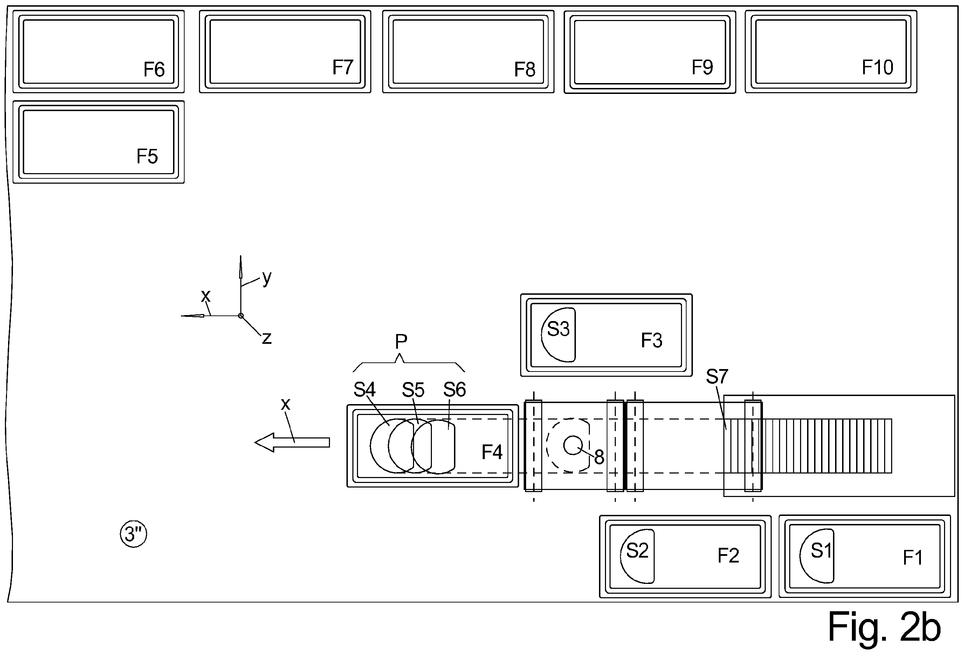

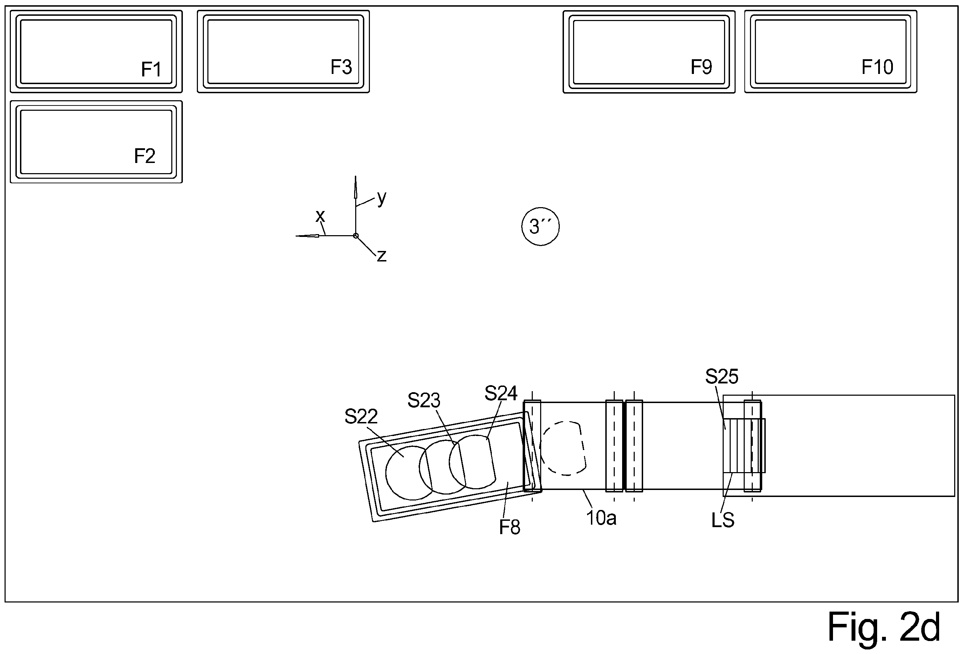

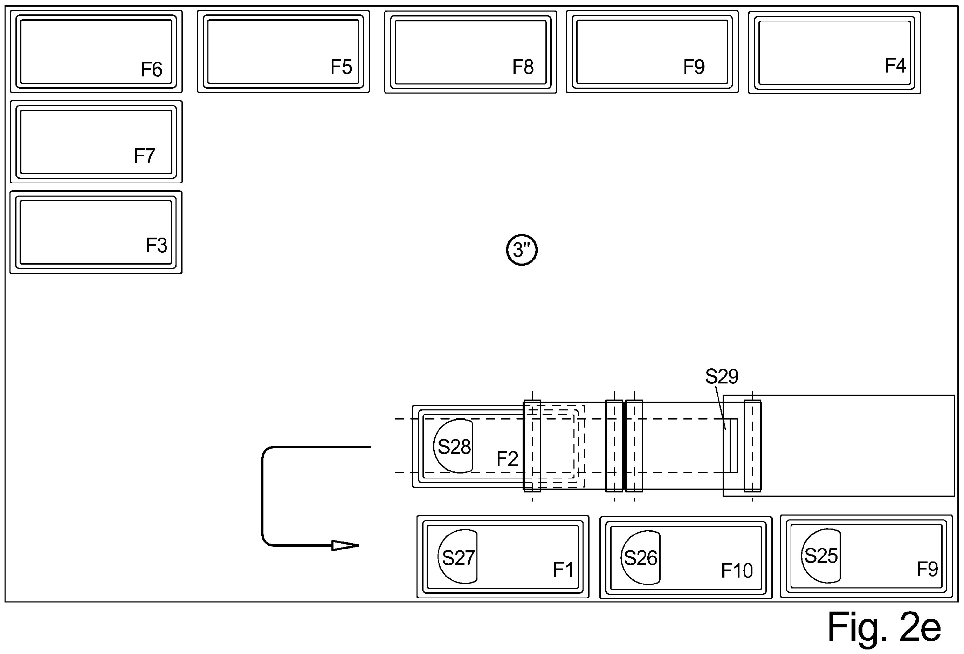

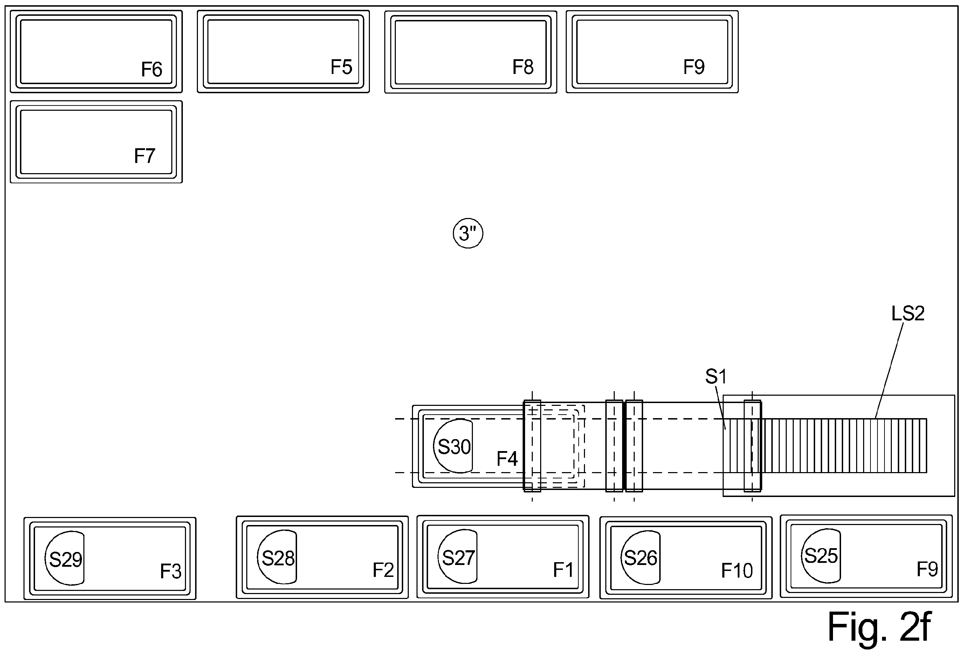

Mit den auf der Fahrfläche 3" verfahrbaren - bei Bedarf auch schwebenden, vorzugsweise jedoch auf Gleitfüßen gleitenden - Fahrzeugen F kann sowohl das bei einer gewünschten Sortierung innerhalb der Portion P vorhandene Puffer-Problem als auch das Positionierungs-Problem ausschließlich mit Hilfe des Fahrzeug-Systems 2 und ohne weitere Hilfsmittel gelöst werden wie anhand der **Figuren 1** und **2** dargestellt, wobei jedoch die von der Bezeichnung einander entsprechenden **Figuren 1** und **2** nicht den analogen Funktions-Zustand darstellen:
So zeigt **Figur 1a** den Anfangszustand, in dem das Lebensmittel-Stück LS zwar bereits an die Anschlagplatte 14 angelegt ist, die erste Scheibe S1 aber noch nicht abgetrennt wurde.

In **Figur 2a** ist dies jedoch bereits geschehen und die erste Scheibe S1 wurde mit Hilfe der Zuförder-Einheit 10 bereits auf dem Tray als Verpackungs-Element V des Fahrzeugs F1 abgeworfen, wofür sich das Fahrzeug F1 in der richtigen Auffang-Position, also z.B. teilweise unter dem Abwurf-Ende des abwerfenden Förderers 10a eingefahren, von der Steuerung platziert war. Dabei wird ersichtlich, dass diese erste abgetrennte Scheibe S1 kleiner ist als die zum Größenvergleich in der **Figur 2a** separat dargestellte Scheibe S15 aus dem mittleren Bereich, hier S15.

Ferner ist in **Figur 2a** zur Orientierung nochmals das Lebensmittelstück LS in der Seitenansicht dargestellt, da in der Aufsicht der **Figuren 2** eine gleichbleibende Breite über die gesamte Länge unterstellt wird.

Da auf dem Fahrzeug F1 als weitere Scheiben der Dreierportion Scheiben aus dem mittleren Bereich mit gleichmäßigen großen Querschnitt des Lebensmittel-Stückes LS, also von Scheibe S5 bis S24, gewünscht werden, wird das nur mit der Scheibe S1 beladene Fahrzeug F1 anschließend in eine Parkposition verfahren wie angedeutet, und es kommt eines der im Parkstellung dargestellten weiteren Fahrzeuge F2 bis F10 mit noch leerem Verpackungselement V zum Einsatz, beispielsweise das Fahrzeug F2, wie bereits gemäß **Figur 1b** bereitstehend an der Auftreffstelle dargestellt, auf welches die nächste Scheibe S2 gerade vom abwerfenden Förderer 10a abgeworfen wird.

Die nun vorderste Scheibe S3 des Fleischstückes liegt bereits am Anschlag 14 an und ist zum Abtrennen durch das Messer 13 bereit, um danach von der Zuförder-Einheit 10 auf dem Fahrzeug F3 und dessen Verpackungs-Element V abgelegt zu werden und das Fahrzeug F2 danach ebenfalls in eine Parkposition zu verfahren wie in **Figur 1c** **und** **2b** ersichtlich.

Die nachfolgende Scheibe S4 ist jedoch die letzte Scheibe des vorderen Endbereiches des Fleischstückes. Diese wird beispielsweise auf dem Fahrzeug F4 abgelegt, aber da nun mit S5 und S6 Scheiben aus dem geleichmäßigen Mittelteil folgen, können diese unmittelbar nachfolgend abgetrennt ebenfalls auf dem Fahrzeug F4 abgelegt werden, wie in den **Figuren 1c** und **2b** erkennbar, und danach das nun eine vollständige Portion P tragende Fahrzeug F4 wegfahren werden - in diesem Fall aus dem Sichtbereich der Figuren - zur Weiterbearbeitung des Trays V mit der fertigen Portion P darin.

Anschließend wird gemäß **Figur 2c** eines der geparkten und mit nur einer Scheibe aus dem Anfangsbereich beladenen Fahrzeuge, in diesem Fall F3 mit der Scheibe S3, an die Auftreffstelle unter dem Abwurfende des abwerfenden Förderers 10a verfahren und darauf nacheinander- natürlich mit Verfahrung des Fahrzeugs F3 in Förderrichtung X dazwischen, also an die richtige Auffang-Stelle - mit den nächsten Scheiben S7 und S8 aus dem mittleren Bereich beladen und kann danach mit vollständiger Portion P zur Weiterverarbeitung fahren.

Ebenso werden anschließend die Portionen auf den Fahrzeugen F2 und F1 vervollständigt, wofür die Scheiben S9, S10 sowie S11, S12 verbraucht werden.

Danach sind unter Umständen keine zu vervollständigenden Teil-Portionen auf Fahrzeugen mehr vorhanden, sodass nun der Rest des Mittelteils mit jeweils aufeinander folgend abgetrennten Scheiben auch aufeinander folgend abgelegt in einem Fahrzeug zu Portionen erstellt werden können, wie in **Figur 1d** für das Fahrzeug F5 und den darin befindlichen Scheiben S13 bis S15 dargestellt.

In **Figur 1d** ist ferner ersichtlich, wie bereits die nächste Scheibe S16 vom Lebensmittelstück LS abgetrennt wird und auf den hintersten Förderer 10b der Zuförder-Einheit 10 fällt.

Das letzte Fahrzeug, welches vollständig mit Scheiben aus dem Mittelteil beladen werden kann, ist das die Scheiben S22 bis S24 tragende Fahrzeug F8, wie in **Figur 2d** dargestellt.

Dabei ist ersichtlich, dass die letzte Scheibe S24 - lediglich als Beispiel - verdreht auf dem abwerfenden Förderer 10a lag, weshalb das Fahrzeug F8 für das Auffangen der Scheibe S 24 ebenfalls analog schräg stehend und gegebenenfalls nicht an derselben Querposition in Y-Richtung wie der abwerfende Förderer 10a an der Auffangstelle positioniert ist, um eine mit exakt zueinander ausgerichteten, geschindelten Scheiben S22 bis 24 bestehende Portion P zu erzeugen.

Die Position und Drehlage auf dem abwerfenden Förderer 10a wurde zuvor von dem Lage-Detektor 8, vorzugsweise eine über diesem abwerfenden Förderer 10a hängende Kamera 8, ermittelt und an die Steuerung gemeldet.

Die anschließend zur Abtrennung vom Fleischstück LS anstehende nächste Scheibe S25 ist die erste Scheibe des hinteren Endbereichs und bereits etwas kleiner als die Scheiben S5 bis S24 des mittleren Bereichs und wurde gemäß **Figur 1e** bereits auf einem Fahrzeug F9 und dem dortigen Verpackungs-Element V abgelegt und das Fahrzeug F9 nur mit dieser einen Scheibe S25 als Teil-Portion beladen in Parkposition verbracht, und das gleiche anschließend auch für die Scheiben S26, S27, S28 durchzuführen wie in **Figur 2e** ersichtlich und des Weiteren auch für die Scheiben S29 und S30 wie in **Figur 2f** sichtbar.

Da in diesem Fall der hintere Endbereich länger ist als der vordere Endbereich und insgesamt sechs Scheiben umfasst, werden in diesem Zustand sechs der insgesamt zehn vorhandenen Fahrzeuge zum Zwischenpuffern je einer Scheibe des hinteren Endbereiches benutzt.

Anschließend wird wie für den Anfang des Fleischstückes LS beschrieben vorgegangen, jedoch mit folgendem Unterschied:
Während beim ersten Fleischstück LS nach der Scheibe S12 keine Fahrzeuge mit unfertigen Portionen mehr in Wartestellung standen, sind nun vom Ende des ersten Fleischstückes LS z.B. sechs Fahrzeuge mit je einer kleineren Scheibe aus dem hinteren Endbereich beladen in Warteposition. Jede davon wird beginnend ab der Scheibe S13 des mittleren Bereiches wiederum unter den abwerfenden Förderer 10a gefahren und darauf zwei Scheiben, z.B. S13 und S14, nacheinander abgelegt, um dort eine Portion auf drei Scheiben zu komplettieren, wofür bis zur letzten der sechs puffernden Fahrzeuge sämtliche Scheiben bis zur Scheibe S24 des mittleren Bereiches benötigt werden.

Anschließend werden die Scheiben des hinteren Endbereichs des nächsten Fleischstückes LS wiederum jeweils einzeln auf einem Fahrzeug zwischengespeichert und dieses in eine Parkposition verfahren.

Je nachdem wie lang der Anfangs- und Endbereich eines solchen Fleischstückes ist, kann eine relativ große Anzahl von Fahrzeugen F des Fahrzeug-Systems 2 lediglich zum Zwischenpuffern von z.B. je einer Scheibe aus dem Endbereich benötigt werden.

Da die Fahrzeuge F teuer in der Anschaffung sind und vor allem der benötigte Parkraum teuer ist, da er ebenfalls mit Boden-Magneten 4a besetzt sein muss, kann es sich lohnen, einen anderen Puffer anstelle und/oder zusätzlich zu den Fahrzeugen F des Fahrzeug-Systems 2 vorzusehen.

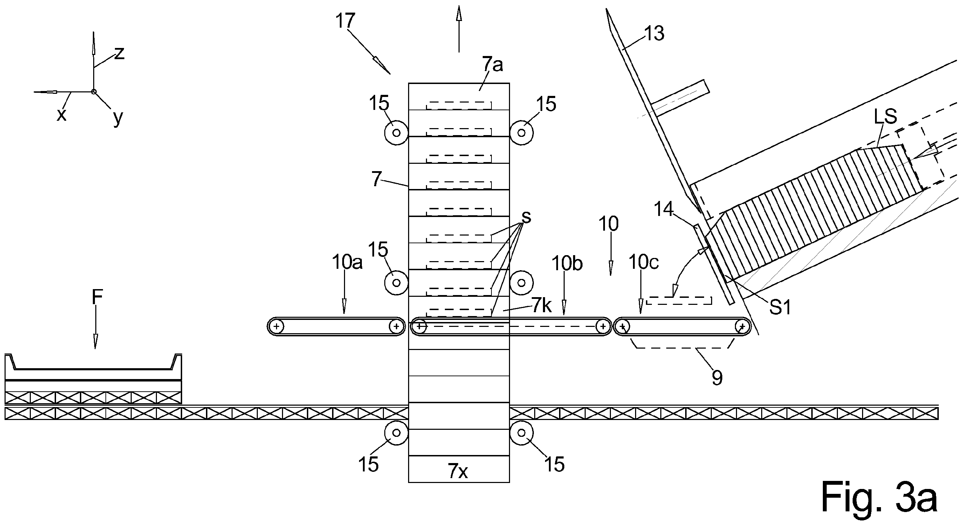

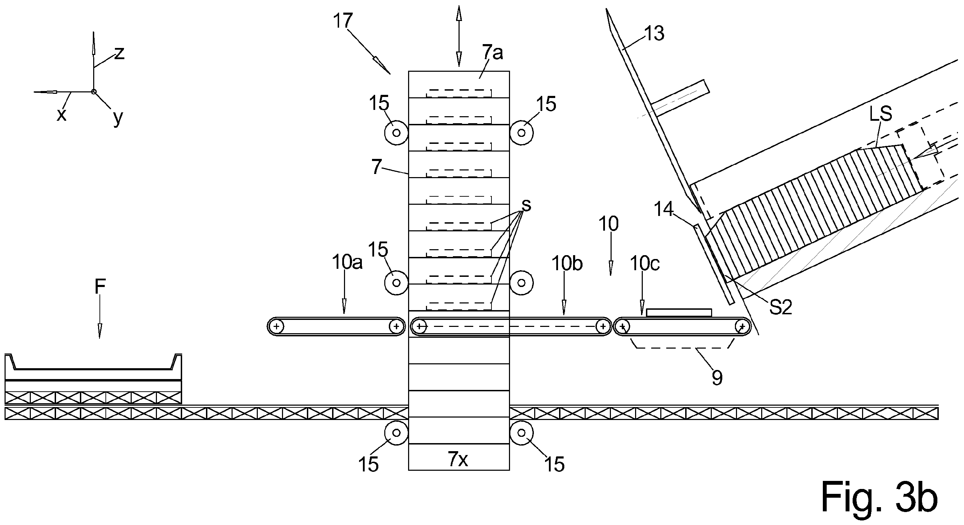

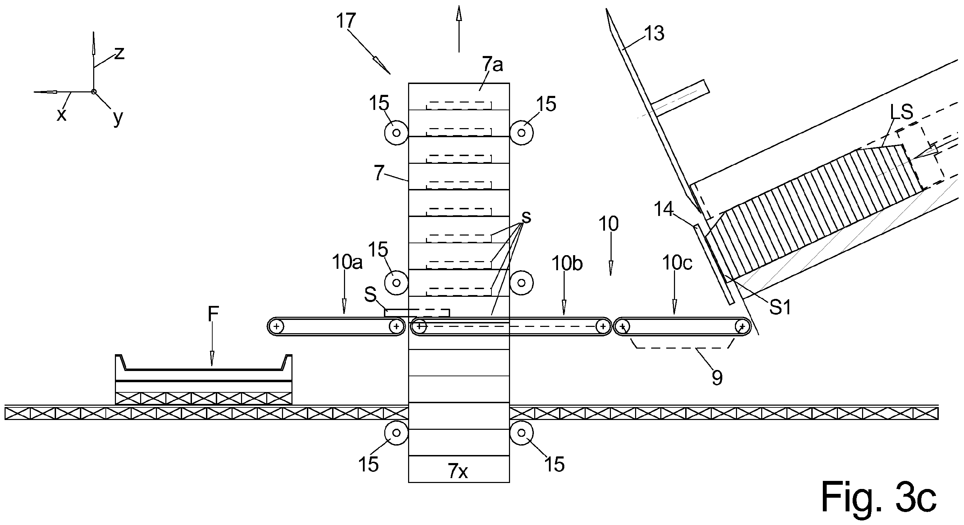

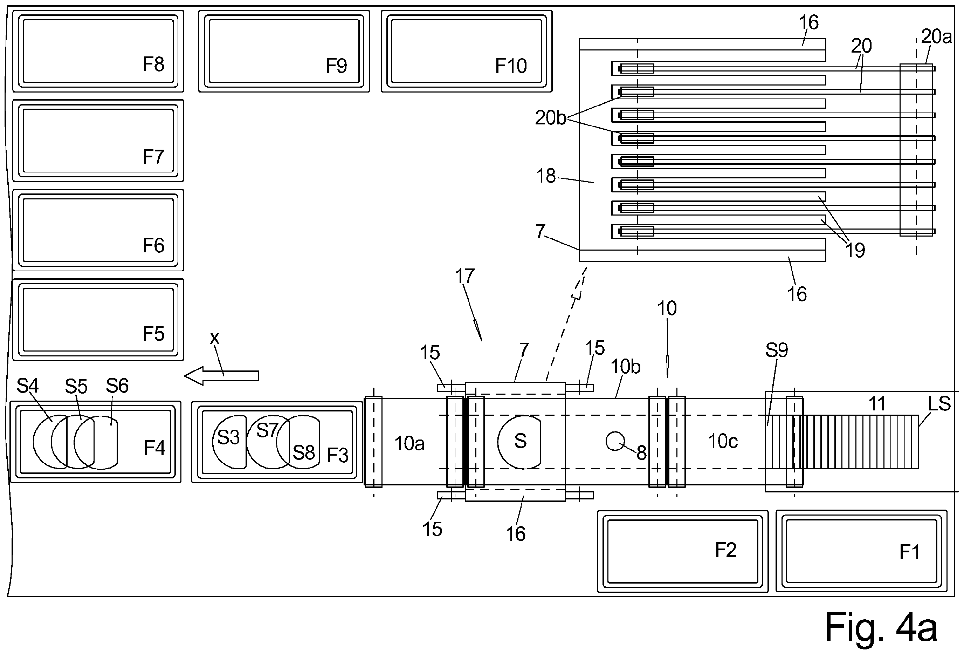

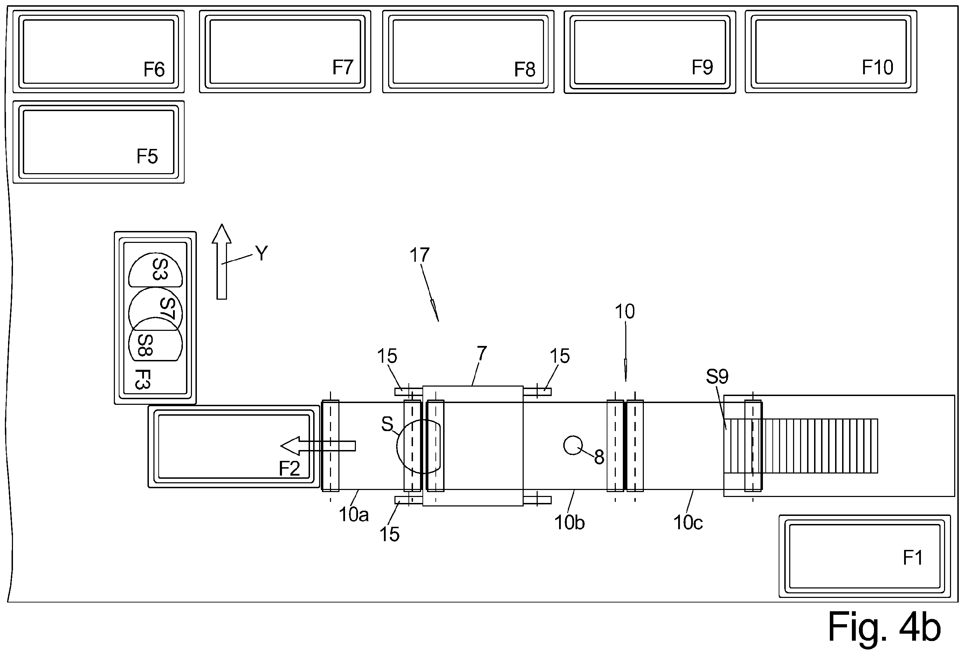

So zeigen die **Figuren 3a****,** **b****,** c in der Seitenansicht und die **Figuren 4a****, b** in der Aufsicht eine Bauform der Ablage-Vorrichtung 1, bei der ein zusätzlicher vertikaler Zwischenspeicher 17 vorhanden ist, der aus einer Vielzahl von übereinander angeordneten in und entgegen der Förderrichtung X offenen, Fächern 7a bis 7x besteht, die fest miteinander verbunden sind zu einem Speicher-Regal 7, das durch gesteuert antreibbare Transportelemente, hier seitlich an den in Förderrichtung X liegenden, aufrecht stehenden Seitenwangen 16 des Speicher-Regals 7 angreifende und um eine horizontale Achse drehbare Antriebswalze 15, mit jedem gewünschten Ablagefach, z.B. 7k, auf eine solche Höhe eingestellt werden kann, dass der hierzu unmittelbar in Förderrichtung X stromaufwärtige , den Zwischenspeicher 17 beladende und entladende, Förderer 10b darin ein Teil, etwa eine Scheibe S, ablegen kann.

Zu diesem Zweck reicht in der Aufsicht betrachtet dieser stromaufwärtige Förderer 10b von dessen stromaufwärtigen Ende in Förderrichtung X in den Zwischenspeicher 17 hinein bis zu dessen stromabwärtigen Ende, wodurch sich die Scheibe S in dem in X-Richtung im Längenbereich des Zwischenspeicher 7 befindet, wie in **Figur 4a** dargestellt.

Dies ist möglich indem - wie in der Vergrößerung in **Figur 4a** dargestellt - die Fachböden 18 der Ablagefächer 7a bis 7x aus beabstandeten Tragleisten 19 bestehen, die nur an ihren stromabwärtigen Enden miteinander verbunden sind und sich daher zwischen einzelnen, endlosen Riemen 20, die in vertikalen, in Förderrichtung X liegenden, Ebenen umlaufen, vertikal hindurch bewegen können.

Aus diesen synchron angetriebenen Riemen 20 besteht der kooperierende, als Riemen-Förderer ausgebildete, Förderer 10b.

Die Riemen 20 laufen an ihrem stromaufwärtigen außerhalb des Lager-Regals 7 liegenden, Ende über eine gemeinsame, über die gesamte Breite des Förderers 10b durchgehende, angetriebene Umlenkwalze 20a um. An ihrem in das LagerRegal 7 hineinragenden, stromabwärtigen, vorderen Ende läuft dagegen jeder Riemen 20 über eine eigene, separate Umlenkrolle 20b um, die in Querrichtung Y nicht miteinander verbunden sind, sondern jeweils über eine nicht dargestellte, in Förderrichtung X verlaufende, Tragwange stromaufwärts des Lager-Regals 7 an dem Grundgestell dieses Förderers 10b befestigt ist, wobei der freie Abstand in Querrichtung Y zwischen den einzelnen Umlenkrolle 20b in der Aufsicht betrachtet groß genug ist, damit sich je eine Tragleiste 19 dazwischen in der Vertikalen Z hindurch bewegen kann .

Durch Hochfahren des Speicher-Regals 7 so, dass ein Fachboden 18, der sich vorher mit der Oberseite seiner Tragleisten 19 noch unterhalb der Oberseite der Obertrume der Riemen 20 des Förderers 10b befand - wie in **Figur 3a** dargestellt - diese nach oben durchläuft, wie mit dem vertikalen Pfeil in **Figur 3a** angedeutet und die darauf liegende Scheibe S nach oben mitnimmt gemäß **Figur 3b****,** ist der Förderer 10b frei zum Hineintransportieren der nächsten Scheibe in den Zwischenspeicher 7.

Auf diese Art und Weise kann das Speicher-Regal 7, beginnend mit dem obersten Fach 7a und von dort fortlaufend nach unten jedes Fach mit z.B. einer Scheibe S befüllt werden, bis diese wieder benötigt werden.

Zum Entnehmen wird analog umgekehrt ein Fachboden 18, auf dem eine Scheibe S liegt, bis knapp unterhalb der Oberseite der Obertrume der Riemen 20 des Förderers 10b verfahren, sodass die Scheibe S dann auf dem Förderer 10b dessen Riemen 20 daraufhin in Umlaufrichtung angetrieben werden, wodurch die Scheibe S an den fluchtend stromabwärts nachfolgenden, abwerfenden Förderer 10a übergeben wird, wie in **Figur 3c** und **Figur 4b** ersichtlich, und auf ein an der Auffangposition bereitstehendes Fahrzeug F abwerfen kann.

Dadurch kann der Zwischenspeicher 17 Fach für Fach wieder entleert werden, aber wie ersichtlich nur in der Reihenfolge der gefüllten Fächer von unten nach oben, sodass ein solcher Zwischenspeicher 17 nur nach dem last-in-first-out-Prinzip betrieben werden kann.

### BEZUGSZEICHENLISTE

- 1: Ablage-Vorrichtung
- 2: Fahrzeug-System
- 3: Fahr-Boden
- 3a: Fahrbelag
- 3": Fahr-Fläche
- 4: Antrieb
- 4a: Boden-Magnet
- 4b: Fahrzeug-Magnet
- 5: Formatplatte
- 6: Befestigungsvorrichtung
- 7: Zwischenspeicher
- 8: Lage-Sensor, Kamera
- 9: Waage
- 10: Zuförder-Einheit
- 10a: abwerfender Zuförderer
- 11: Formrohr
- 12: Längspress-Stempel
- 13: Messer
- 14: Anschlagplatte
- 15: Antriebswalze
- 16: Seitenwange
- 17: Zwischenspeicher
- 18: Fachboden
- 19: Tragleiste
- 20: Riemen
- 20a: Umlenkwalze
- 20b: Umlenkrolle
- F1 - F10: Fahrzeug
- LS: Lebensmittel-Stück
- P: Portion
- (S: Scheibe)
- T: Teil
- V: Verpackungselement, Tray
- X: Förder-Richtung, 1. horizontale Richtung
- Y: 2. horizontale Richtung
- Z: aufrechte Richtung, vertikale Richtung

## Patentansprüche

1. **Verfahren** zum Lage-genauen Erzeugen einer Portion (P) nach wenigstens einem vorgegebenen Portionier-Parameter aus einem oder mehreren, insbesondere formhaltigen, Teilen (T), insbesondere Scheiben (S) in Form insbesondere eines Lebensmittels in oder auf einem Verpackungselement, insbesondere aus Scheiben (S), die von einem regelmäßig oder auch unregelmäßig geformten Lebensmittel-Stück (LS) abgetrennt wurden,
indem
- das eine Teil (T) oder die mehreren Teile (T) hintereinander auf eine einteiligen oder in Transportrichtung (X) mehrteiligen Zuförder-Einheit (10) gelegt oder fallen gelassen wird,
- die Position und/oder Drehlage des mindestens einen Teiles (T) auf der Zuförder-Einheit (10) detektiert wird,
- das mindestens eine Teil (T) von der Zuförder-Einheit (10) auf das Verpackungselement (V) abgeworfen wird, wobei vorher
- das Verpackungselement (V) in definierter Position auf einem alleine antriebslosen Fahrzeug (F) positioniert wurde,
- das antriebslose Fahrzeug (F) von unterhalb der Fahrfläche (3") aus angetrieben und so hinsichtlich Position und/oder Drehlage unter dem Abwurf-Ende der Zuförder-Einheit (10) an einer Auffang-Position positioniert wird, dass das vom abwerfenden Zuförderer (10a) der Zuförder-Einheit (10) abgeworfene Teil (T) in der gewünschten Soll-Lage auf dem Verpackungselement (V) auftrifft.

2. Verfahren nach Anspruch 1,
**dadurch gekennzeichnet, dass**
bei einer Portion (P) aus mehreren Teilen (T)
A) die Portion (P) oder eine Teil-Portion, die aus mehreren Teilen (T) besteht, auf der Zuförder-Einheit (10) gebildet wird durch Ablegen von mehreren Teilen darauf, insbesondere hintereinander
und/oder
B) die Portion (P) oder eine Teil-Portion, die aus mehreren Teilen (T) besteht, auf dem Verpackungselement (V) gebildet wird durch Abwerfen eines oder mehrerer Teile (T), insbesondere einer Teil-Portion, mittels der Zuförder-Einheit (10) darauf, insbesondere hintereinander.

3. Verfahren nach einem der vorhergehenden Ansprüche
**dadurch gekennzeichnet, dass**
die Bestimmung der Auffang-Position für das Fahrzeug (F) erfolgt unter Berücksichtigung von Auffang-Parametern, insbesondere
- der detektierten Ist-Position und/oder Drehlage des wenigstens einen Teiles (T) auf der Zuförder-Einheit (10)
und/oder
- der Abwurfgeschwindigkeit des wenigstens einen Teiles (T) durch den abwerfenden Zuförderer (10a)
und/oder
- dem detektierten Gewicht des wenigstens einen Teiles (T) auf der Zuförder-Einheit (10)
und/oder
- der ermittelten Ist-Position des vorhergehenden einen oder mehreren Teiles (T) auf dem abwerfenden Zuförderer (10a) und/oder dem Verpackungselement (V)
und/oder
- dem Trend der Veränderung der ermittelten Ist-Position des einen oder mehreren Teiles (T) auf dem abwerfenden Zuförderer (10a) und/oder dem Verpackungselement (V).

4. Verfahren nach Anspruch 3,
wobei das Verpackungselement (V), insbesondere auch das Fahrzeug (F), beim Auftreffen des Teiles (T) in Bewegung ist,
**dadurch gekennzeichnet, dass**
- Geschwindigkeit und/oder Richtung der Bewegung des Verpackungselements (V), insbesondere auch des Fahrzeuges (11), an der Auffang-Position unter Berücksichtigung der Auffang-Parameter ermittelt werden.
(Sortieren:)

5. Verfahren nach einem der vorhergehenden Ansprüche,
**dadurch gekennzeichnet, dass**
vor dem Abwerfen auf der Zuförder-Einheit (10) wenigstens ein Sortier-Parameter des Teiles (T) ermittelt und diesem zugeordnet gespeichert wird, insbesondere während des Aufenthalts auf dem Zuförderer (10), insbesondere
- das Gewicht des Teiles (T)
und/oder
- die Größe des Teiles (T) in seiner Hauptebene und/oder quer hierzu
und/oder
- die Krümmung des Teiles (T)
und/oder
- die Farbe des Teiles (T)
und/oder
- die Elastizität des Teiles (T)
und/oder
- die Temperatur des Teiles (T).
(Portionieren nur mittels Fahrzeug:)

6. Verfahren nach einem der vorhergehenden Ansprüche,
**dadurch gekennzeichnet, dass**
zum Herstellen einer Portion (P) aus mehreren Teilen (T)
- auf das Verpackungselement (V) des Fahrzeugs (F) ein erster Teil der Portion (P) abgelegt wird,
- dieses Fahrzeug (F) abseits geparkt wird,
- bei zur Verfügung stehen eines nächsten im Sinne des wenigstens einen Portionier-Parameters geeigneten Teils (T) für die Portion (P) auf dem auf das Fahrzeug (F) abwerfenden Förderer (10a) der insbesondere mehrteiligen der Zuförder-Einheit (10).
- dieses Fahrzeug (F) an die Auffang-Position verfahren wird,
- dieses nächste Teil (T) auf dem Verpackungselement (V) dieses Fahrzeuges (F) abgelegt wird,
- der Vorgang wiederholt wird, bis die gewünschte Portion (P) fertiggestellt ist.

7. Verfahren nach einem der vorhergehenden Ansprüche,
**dadurch gekennzeichnet, dass**
die Eignung des Teils (T) für die Portion (P) und deren Portionier-Parameter anhand eines oder mehrerer der Sortier-Parameter festgelegt wird.
(Portionieren mit zusätzlichem Speicher:)

8. Verfahren nach einem der vorhergehenden Ansprüche,
**dadurch gekennzeichnet, dass**
- stromaufwärts des abwerfenden Zuförderers (10a) Teile (T) oder Teil-Portionen separat voneinander (definieren) zwischengespeichert werden,
- die insbesondere wahlfrei auf den abwerfenden Zuförderer (10a) übergebbar sind,
- die zur Verfügung-Stellung des nächsten geeigneten Teils für die Portion (P) auf dem abwerfenden Zuförderer (10a) aus einem insbesondere ortsfesten Zwischenspeicher (17) erfolgt.
(Nur Richtungsänderung, keine Drehung)

9. Verfahren nach einem der vorhergehenden Ansprüche,
**dadurch gekennzeichnet, dass**
das Fahrzeug (F) bei Ändern seiner Fahrtrichtung (F'), was insbesondere nur um jeweils 90° erfolgt, die Drehlage des Fahrzeuges (F) unverändert beibehält.
(Auch Drehung des Fahrzeuges, insbesondere auf der Stelle:)

10. Verfahren nach einem der vorhergehenden Ansprüche,
**dadurch gekennzeichnet, dass**
das Fahrzeug (F), zumindest im Stillstand, um eine Hochachse (Z) des Fahrzeuges (F) drehend angetrieben wird, insbesondere auf der Stelle.
(Auch gesteuerte Drehung des Fahrzeuges zwecks Kurvenfahrt:)

11. Verfahren nach einem der vorhergehenden Ansprüche,
**dadurch gekennzeichnet, dass**
- das Fahrzeug (F) während der Fahrt, insbesondere auch während der Änderung seiner Fahrtrichtung (F') und insbesondere in Abhängigkeit von der Änderung der Fahrtrichtung (F'), um eine Hochachse (Z) des Fahrzeuges (F) drehend angetrieben wird und dadurch eine Kurvenfahrt des Fahrzeuges (F) unter Veränderung seiner Drehlage bewirkt wird
und/oder
- das Fahrzeug (F) von einer Startposition aus in alle Richtungen der meist zweidimensionalen Fahrfläche (3") verfahrbar ist.

12. **Ablage-Vorrichtung** (1) zum Lage-genauen Erzeugen einer Portion (P) nach wenigstens einem vorgegebenen Portionier-Parameter aus einem oder mehreren, insbesondere formhaltigen, Teilen (T) in Form insbesondere eines Lebensmittels in oder auf einem Verpackungselement (V), umfassend
- einer in Förderrichtung (X) einteiligen oder mehrteiligen der Zuförder-Einheit (10), der die Portion (P) oder eine Teilportion herantransportiert und einen abwerfenden Zuförderer (10a) enthält,
- ein Fahrzeug-System (2) mit einer Vielzahl von alleine antriebslosen Fahrzeugen (F1 - F10), das so ausgebildet ist, dass die Fahrzeuge auf einer Fahrfläche (3") fahren oder über einer Fahrfläche (3") schweben und unabhängig voneinander von einem unterhalb der Fahrfläche (3") angeordneten Antrieb (4) antreibbar sind und damit an einer Auffang-Position unterhalb des abwerfenden Zuförderers (10a) (definieren) hinsichtlich Position und/oder Drehlage exakt positioniert werden können,
- einer Steuerung (1*) zum Steuern zumindest beweglicher Teile der Ablage-Vorrichtung (1).
(Format-Platte:)

13. Ablage-Vorrichtung nach Anspruch 12,
**dadurch gekennzeichnet, dass**
- jedes Fahrzeug (F1 - F10) eine Befestigungsvorrichtung (6) aufweist, um daran auf seiner Oberseite in definierter Position, insbesondere formschlüssig, eine Formatplatte (5) befestigen zu können, die auf das auf ihrer Oberseite anzuordnende Verpackungselement (V) abgestimmt ist, insbesondere formschlüssig abgestimmt ist,
- insbesondere die die Befestigungsvorrichtung (6) so ausgebildet ist, dass die dieselbe Formatplatte (5) auf dem Fahrzeug (F) in mindestens zwei verschiedenen, insbesondere zueinander um die Hochachse gedrehten, Positionen anordenbar ist.

14. Ablage-Vorrichtung nach einem der vorhergehenden Vorrichtungs-Ansprüche,
**dadurch gekennzeichnet, dass**
die Fahrfläche (3") die geschlossene und vorzugsweise geschlossene, ebene Oberseite eines Fahrbodens (3) aus leicht zu reinigendem Material, insbesondere Edelstahl, ist.
(Zusätzlicher Vertikal-Puffer:)

15. Ablage-Vorrichtung nach einem der vorhergehenden Vorrichtungs-Ansprüche,
**dadurch gekennzeichnet, dass**
- die Ablage-Vorrichtung (1) einen zusätzlichen Zwischenspeicher (17) für Teile (T) wie etwa Scheiben (S), insbesondere ohne Verpackungselement (V) darunter, umfasst,
- insbesondere in Form eines vertikalen Zwischenspeichers (17) mit einem vertikal gesteuert verfahrbaren Speicher-Regal (17) mit in Förderrichtung (X) beidseits offenen, übereinander angeordneten, Fächern (7a - 7x).
